# EUROPEAN PATENT APPLICATION

(11) **EP 2 862 621 A1**
(43) Date of publication of application: **22.04.2015**
(21) Application number: 13807776.3
(22) Date of filing: 12.06.2013
(51) Int. Cl.: B01D 53/94, B01J 23/28

(54) **METHOD FOR DISCHARGE GAS DENITRATION**

(30) Priority: 19.06.2012 JP 2012137548
(71) Applicant: Babcock-Hitachi Kabushiki Kaisha, Chiyoda-ku Tokyo 101-0021 (JP)
(72) Inventor: MATSUYAMA, Kotoe, Kure-shi Hiroshima 737-8508 (JP); KATO, Yasuyoshi, Kure-shi Hiroshima 737-8508 (JP); IMADA, Naomi, Kure-shi Hiroshima 737-8508 (JP); KAI, Keiichiro, Kure-shi Hiroshima 737-8508 (JP)
(74) Representative: Lock, Graham James
(86) International application number: PCT/JP2013/066195
(87) International publication number: WO 2013/191053

(57) **Abstract**

In order to provide a method for flue gas denitrification, which can suppress the deterioration of a denitrification catalyst which is used in treatment for a combustion flue gas of biomass, and decreases the frequency of the replacement of the catalyst, the method includes: blowing ammonia or urea as a reducing agent into the flue gas that is formed by a mono-fuel combustion of biomass or a multi-fuel combustion of a biomass fuel and coal; bringing the flue gas into contact with the denitrification catalyst that contains titanium oxide as a main component; and reducing and removing nitrogen oxide contained in the flue gas, wherein sulfuric acid or SO₃ gas is injected into the flue gas which flows upstream of the denitrification catalyst.

## Description

### Technical Field

The present invention relates to a method for flue gas denitrification, and particularly relates to a denitrification method which is suitable for denitrification treatment for a combustion flue gas that is produced when biomass has been combusted.

### Background Art

Global warming caused by the increase of the concentration of CO₂ in the atmosphere advances at a rate beyond assumption, and the reduction of the amount of CO₂ emission has been an urgent problem. Measures to reduce the amount of CO₂ emission have been progressed, which include energy saving to reduce a used amount of a fossil fuel, a measure such as the collection and separation of CO₂ in the combustion flue gas when the fossil fuel is used, and the utilization of natural energy such as a solar cell and wind power generation. In addition, in recent years, the power generation in which biomass is used as a fuel in place of the fossil fuel has received attention as a method that does not cause the increase of CO₂, and has started to be adopted in a form of a mono-fuel combustion of the biomass or a multi-fuel combustion of a biomass fuel and the fossil fuel, mainly in Europe in particular.

Meanwhile, the combustion flue gas of the biomass has an advantage of having a small content of sulfur in comparison with the fossil fuel, but it is known that the combustion flue gas deteriorates a catalyst because a combustion ash of a material originating from plants such as a wood chip and a beet contains an alkaline inorganic salt. Calcium carbonate, in particular, has deliquescency and makes catalytic activity to deteriorate by infiltrating into the catalyst.

It is known that when a potassium ion of potassium carbonate has infiltrated into a denitrification catalyst using for ammonia catalytic reduction, which contains titanium oxide as a main component, for instance, the potassium ion obstructs the adsorption of ammonia (reduction) by previously adsorbing onto an adsorption site of the ammonia, which exists on the titanium oxide, and makes the catalytic activity to deteriorate.

On the other hand, in Patent Literature 1, the applicant reports a technology of previously making a phosphoric acid ion adsorb to the adsorption site of the ammonia in this kind of catalyst, and thereby delaying the deteriorating of the catalytic activity. According to the technology, most of potassium ions which enter into the catalyst firstly react with the phosphoric acid ion that has adsorbed to the catalyst, and newly produce the adsorption sites for the ammonia on titanium oxide, due to this reaction. Accordingly, the technology suppresses the decrease of the adsorption sites for the ammonia, and can delay the deteriorating of the catalytic activity.

### Citation List

### Patent Literature

Patent Literature 1: JP-A-No. 2011-161364

### Summary of Invention

### Technical Problem

Meanwhile, a method disclosed in Patent Literature 1 is a method of kneading the catalyst (titanium oxide) and the phosphoric acid in the presence of water, or heating and kneading the catalyst and the phosphoric acid, so as to keep the phosphoric acid adsorbing to the surface of the catalyst before using. However, in this method, it is impossible to supplement the phosphoric acid to the surface of the catalyst during the treatment of the flue gas. Then, an operation for periodically replacing the catalyst is needed, in order to keep the catalytic activity at a fixed level. Accordingly, a technology for further decreasing the frequency of the replacement of the catalyst has been required.

An object of the present invention is to provide a method which can suppress the deterioration of a denitrification catalyst that is used in treatment for a combustion flue gas of biomass, and decreases the frequency of the replacement of the catalyst.

### Solution to Problem

Here, in order to facilitate understanding of the present invention, such a principle will be specifically described below that the denitrification catalyst deteriorates due to the combustion flue gas of the biomass.

Many of potassium contents which deposit onto the catalyst exist as a carbonate. This carbonate (here in after described potassium carbonate (K₂CO₃) as an example) deliquesces when a flue gas treatment apparatus is in highly wet times such as a start-up time and a stopping time, and enters into the catalyst. The potassium ion of the potassium carbonate which has entered into the catalyst combines with a carbonate ion that is a weak acid, and accordingly easily adsorbs to an OH group which is the adsorption site of ammonia, for instance, on titanium oxide of the catalyst that contains the titanium oxide as a main component (Formula 1).

1/2 K₂CO₃ + HO-Ti-(active spot on TiO₂) → K-O-Ti- + 1/2 H₂O + 1/2 CO₂ (Formula 1)

On the other hand, the ammonia which is a reducing agent in a denitrification reaction also adsorbs to the OH group (adsorption site of ammonia) on the titanium oxide (Formula 2). Here, as for the adsorbabilities of the potassium ion and the ammonia to the OH group on the titanium oxide, the potassium ion is stronger than the ammonia, and accordingly the adsorption of the ammonia to the OH group is obstructed by the potassium ion which has adsorbed to the OH group.

NH₃ + HO-Ti- (active spot on TiO₂) → NH₄-O-Ti- (Formula 2)

Thus, the method according to the present invention includes spraying sulfuric acid (H₂SO₄) or SO₃ formed by the oxidation of SO₂ gas, into the flue gas upstream of the denitrification catalyst. A part of the sulfuric acid which has been sprayed into the flue gas as in the above way is decomposed as in Formula 3 and forms SO₃, in such a temperature region as the denitrification catalyst is installed. As shown in formulae 4 and 5, potassium carbonate which has deposited onto the denitrification catalyst reacts with the added sulfuric acid or SO₃, and gradually changes to potassium sulfate. Here, because the potassium sulfate has no deliquescency, the potassium sulfate resists moving to the catalyst by the humidity like the potassium carbonate, even though having deposited on the catalyst. In addition, even if the potassium sulfate has entered into the catalyst, the potassium ion of the potassium sulfate combines with a sulfate ion which is a strong acid, and accordingly is hardly adsorbed by the OH group on the titanium oxide. Thereby, the decrease of the OH group which is the adsorption site of the ammonia can be suppressed, and accordingly the deterioration of the catalytic activity (catalyst deterioration) can be alleviated.

H₂SO₄ ↔ SO₃ + H₂O (Formula 3)

K₂CO₃ + SO₃ → K₂SO₄ + CO₂ (Formula 4)

K₂CO₃ + H₂SO₄ → K₂SO₄ + CO₂ + H₂O (Formula 5)

Specifically, in order to solve the above described problems, a method for flue gas denitrification according to the present invention, which includes: blowing ammonia or urea as a reducing agent into a flue gas that is formed by a mono-fuel combustion of biomass or a multi-fuel combustion of a biomass fuel and coal; bringing the flue gas into contact with a denitrification catalyst that contains titanium oxide as a main component; and reducing and removing nitrogen oxide contained in the flue gas, wherein sulfuric acid or SO₃ gas is injected into the flue gas which flows upstream of the denitrification catalyst.

The method according to the above can continuously or intermittently supply the sulfuric acid or SO₃ gas in a state of being entrained in the flue gas, to the surface of the catalyst, even in the flue gas treatment, and accordingly can continually change the potassium ion which deposits on the surface of the catalyst or intrudes through the surface of the catalyst, into potassium sulfate. Accordingly, the method can keep the catalytic activity high for a long period of time, and can remarkably decrease the frequency of the replacement of the catalyst.

In this case, the amount of the sulfuric acid or SO₃ gas to be sprayed is preferably adjusted so that a concentration of the SO₃ in the flue gas which flows upstream of the denitrification catalyst is 10 ppm or more and 100 ppm or less. Thereby, the method can balance the effect of the sulfuric acid or SO₃ gas with the economical efficiency.

### Advantageous Effects of Invention

The method according to the present invention can suppress the deterioration of the denitrification catalyst which is used in the treatment for the combustion flue gas of the biomass, and can decrease the frequency of the replacement of the catalyst.

### Brief Description of Drawings

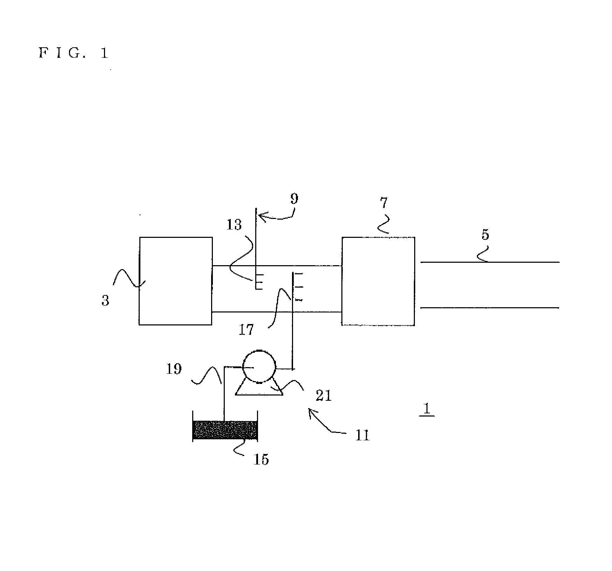

[Figure 1] Figure 1 is a view showing a schematic structure of a flue gas treatment apparatus to which a method for flue gas denitrification according to the present invention is applied.

### Description of Embodiments

One embodiment of the method for flue gas denitrification to which the present invention is applied will be described specifically below with reference to the drawings. Figure 1 shows a view showing a schematic structure of a flue gas treatment apparatus to which the method for flue gas denitrification according to the present embodiment is applied. The flue gas treatment apparatus of the present embodiment has a structure which is suitable for treating a combustion flue gas, for instance, of a boiler which performs a mono-fuel combustion of biomass or a multi-fuel combustion of a biomass fuel and coal.

The flue gas treatment apparatus 1 of the present embodiment includes: a flue gas duct 5 which is connected to a boiler 3 and passes the combustion flue gas therethrough; a denitrification device 7 which is arranged on the flue gas duct 5; a reducing-agent spraying device 9 which is arranged on the flue gas duct 5 upstream of the denitrification device 7; and a sulfuric acid spraying device 11 which is arranged on the flue gas duct 5 between the reducing-agent spraying device 9 and the denitrification device 7.

The denitrification device 7 employs a denitrification catalyst component which has been formed, for instance, into a honeycomb shape; and besides, can be structured so as to include a catalyst structure which is formed by applying the denitrification catalyst component to a metal substrate that is worked into a net shape or a net-shaped material formed of a ceramic fiber so that the denitrification catalyst component infill the gaps, thereby converting the substrate or the material into a form of a plate, forming a spacer portion into a wave shape, and laminating the resultant materials. However, the form of the catalyst is not limited to this form. The denitrification catalyst component is not limited in particular, but is preferably a substance, for instance, in which titanium oxide is employed as a main component, and tungsten (W), molybdenum (Mo), vanadium (V), phosphorus (P), aluminum sulfate and the like are added to the main component as another catalyst component.

The reducing-agent spraying device 9 is structured so as to spray a reducing agent such as ammonia and urea, from an injection nozzle 13 which is inserted into the flue gas duct 5. In the present embodiment, an example will be described below in which the ammonia is used as the reducing agent.

The sulfuric acid spraying device 11 is structured so as to have a storage tank 15 for sulfuric acid, an injection nozzle 17 which is inserted into the flue gas duct 5, and a pump 21 which is connected to the storage tank 15 through a pipe 19, and sends out the sulfuric acid that has been extracted from the storage tank 15, to the injection nozzle 17. The pump 21 is structured so that the amount of the sulfuric acid to be ejected is controlled by an unshown control unit. The injection nozzle 17 may have any structure as long as the injection nozzle 17 can spray the sulfuric acid into an atomized state in the flue gas duct 5. The position at which the sulfuric acid spraying device 11 sprays the sulfuric acid into the flue gas duct 5 is not limited in particular, as long as the position is upstream of the denitrification device 7, but is preferably downstream of the position at which the injection nozzle 13 of the reducing-agent spraying device 9 is inserted into the flue gas duct 5. Thereby, the influence caused by the sulfuric acid (acid corrosion and the like) on the injection nozzle 13 can be alleviated.

The amount of the sulfuric acid which is injected into the flue gas duct 5 from the injection nozzle 17 of the sulfuric acid spraying device 11 varies depending on the content of the potassium in the biomass that is combusted by the boiler 3, but the combustion ash which has deposited onto a catalyst stays there for a long period of time, and gradually reacts with the SO₃ in the flue gas. Accordingly, the concentration of SO₃ in the flue gas which flows in the flue gas duct 5 upstream of the denitrification device 7 may be low, and the amount of sulfuric acid to be sprayed may be adjusted to 10 ppm or more and 100 ppm or less, for instance. This is because when the concentration of the SO₃ in the flue gas which is introduced into the denitrification device 7 is lower than 10 ppm, an effect of suppressing the deterioration of catalytic activity due to the SO₃ decreases, but on the other hand, when the concentration is higher than 100 ppm, the supply of the SO₃ becomes excessive, which may cause the deterioration of the efficiency and/or the corrosion of pieces of equipment.

In the present embodiment, an example will be described below in which the sulfuric acid is injected (sprayed) from the injection nozzle 17 of the sulfuric acid spraying device 11, but SO₃ gas obtained by the oxidation of SO₂ gas and SO₃ gas obtained by the decomposition of ammonium sulfate, for instance, can be injected in place of the sulfuric acid. A method for purifying the SO₃ gas is not limited in particular.

In such a structure, only the biomass or both the biomass and the coal are charged to the boiler 3 as fuel, and are combusted. The combustion flue gas generated by the combustion in the boiler 3 is guided into the denitrification device 7 through the flue gas duct 5, and nitrogen oxide and the like in the flue gas are removed. Ammonia is sprayed into the flue gas duct 5 from the injection nozzle 13 of the reducing-agent spraying device 9, and the sulfuric acid is also sprayed thereinto from the injection nozzle 17 of the reducing-agent spraying device 9.

The sulfuric acid which has been sprayed into the flue gas duct 5 reaches the surface of the catalyst in the denitrification device 7 in a state of being entrained in the flue gas, and on the other hand, potassium carbonate contained in the combustion ash of the boiler 3 reaches the surface of the catalyst in a state of being entrained in the flue gas. Here, a potassium ion of the potassium carbonate reacts with the sulfuric acid and becomes potassium sulfate which has no deliquescency, and accordingly resists moving into the catalyst. Even though having moved to the catalyst, the potassium ion resists being adsorbed by the OH group of the catalyst, which is an adsorption site of ammonia. Accordingly, the flue gas treatment apparatus can continually make the catalyst adsorb a predetermined amount of ammonia, by continuously or intermittently injecting sulfuric acid into the flue gas duct 5, and accordingly can greatly decrease the deterioration of the catalyst activity. In addition, the flue gas treatment apparatus 1 of the biomass fuel can thereby keep the performance thereof high for a long period of time, and accordingly can greatly decrease the frequency of the replacement of the catalyst.

Next, the present invention will be described in detail below with reference to examples of the present invention.

### [Catalyst example]

Water was added to 1,200 g of titanium oxide (which is made by Ishihara Sangyo Kaisha, Ltd., and has specific surface area of 100 m²/g), 108.1 kg of molybdenum trioxides, 79.1 kg of ammonium metavanadate, and 553 g of silica sol (which is OS sol made by Nissan Chemical Industries, Ltd., and contains 20 wt% silica in terms of SiO₂), the mixture was kneaded with a kneader for 60 minutes, and 207.4 g of a silica-alumina-based ceramic fiber (made by Nichias Corporation) was gradually added to the kneaded mixture. The mixture was kneaded for 30 minutes while the above ceramic fiber was added thereto, and a catalyst paste containing 27% water was obtained.

The obtained paste was placed on a substrate with a thickness of 0.7 mm, which was obtained by subjecting a steel plate made from SUS 430 having a thickness of 0.2 mm to metal lath working, the metal lath substrate was passed through a pair of pressing rollers, and the paste was applied to the metal lath substrate so as to infill the mesh of the substrate. The applied paste was dried, then the substrate was baked at 450°C for 2 hours, and an early-stage catalyst was obtained. The composition of the present catalyst is Ti/Mo/V = 93.5/5/4.5 by an atom ratio.

### [Example 1]

In order to confirm whether potassium was sulfated by the spray of the sulfuric acid into the combustion flue gas of the biomass and the deterioration of the catalyst activity was alleviated or not, the catalyst which was obtained in the catalyst example was cut out into 100 mm square, was impregnated with an aqueous solution of the potassium sulfate so that the amount of added potassium sulfate became 0.5 wt% in terms of K₂O with respect to the catalyst component, and then was dried at 150°C.

Subsequently, the obtained catalyst was cut out into 20 mm in width x 100 mm in length, and then three sheets of the obtained catalysts were used for the measurement of the denitrification performance on conditions of Table 1. Thus, a poisoning resistance of the catalyst to the deterioration by potassium was evaluated.

**[Table 1]**

| Item | Value |
|---|---|
| 1. Gas composition | |
| NOx | 200 ppm |
| NH₃ | 240 ppm |
| SO₂ | 500 ppm |
| O₂ | 3% |
| CO₂ | 12% |
| H₂O | 12% |
| 2. Gas flow rate | 3.7 liter/minute |
| 3. Temperature | 350°C |
| 4. Amount of charged catalyst | 20 mm in width x 100 mm (full length) - 3 sheets |

### [Comparative example 1]

Similar treatment to that in Example 1 was performed except that the potassium sulfate in Example 1 was changed to potassium carbonate, and a catalyst was obtained. The results of Example 1 and Comparative example 1 were collectively shown in Table 2.

**[Table 2]**

| | Initial denitrification rate (%) | Denitrification rate after poisoning (%) |
|---|---|---|
| Example 1 | 97.3 | 90.3 |
| Comparative example 1 | 97.3 | 72.3 |

When the results in Table 2 are viewed, the catalyst impregnated with the potassium sulfate in Example 1 shows less deterioration of the denitrification performance than the catalyst impregnated with the potassium carbonate in Comparative example 1. From this result, it is understood that the potassium sulfate gives less influence on the denitrification performance than the potassium carbonate. Accordingly, it is obvious that the durability of the catalyst is greatly enhanced if the potassium carbonate is changed to the potassium sulfate by the method of the present embodiment.

### [Example 2]

In order to confirm an effect of spraying the sulfuric acid, the following test was conducted. Firstly, the catalyst which was obtained in the catalyst example was cut out into 100 mm square, was impregnated with an aqueous solution of the potassium carbonate so that the amount of added potassium carbonate became 0.5 wt% in terms of K₂O with respect to the catalyst component, and then was dried at 150°C.

After that, this catalyst was cut out into 20 mm in width x 100 mm in length, was charged into a reaction pipe of a flow system, and was exposed to the gas on conditions shown in Table 3. Here, as for the condition of the gas, the aqueous solution of sulfuric acid was injected into the gas so that the concentration of SO₃ in the gas became 100 ppm. After that, the denitrification performance of the obtained catalyst was measured on conditions of Table 1, and the influence of the spray of the sulfuric acid on the performance was evaluated.

**[Table 3]**

| Item | Value |
|---|---|
| 1. Gas | |
| composition | |
| H₂SO₄ | 100 ppm (in terms of SO₃) |
| O₂ | 3% |
| H₂O | 12% |
| N₂ | Balance |
| 2. Gas flow rate | 2.0 liter/minute |
| 3. temperature | 400°C |
| 4. Amount of charged catalyst | 20 mm in width × 100 mm (full length) - 3 sheets |
| 5. Reaction period of time | 200 h |

### [Comparative example 2]

Similar treatment to that in Example 2 was performed except that the aqueous solution of sulfuric acid in the conditions of Table 3 in Example 2 was changed to water. The results on Example 2 and Comparative example 2 are collectively shown in Table 4.

**[Table 4]**

| | Initial denitrification rate (%) | Denitrification rate after treatment (%) |
|---|---|---|
| Example 2 | 97.3 | 92.4 |
| Comparative example 2 | 97.3 | 72.3 |

When Example 2 is compared with Comparative example 2, the deterioration of the catalytic activity in the case of Example 2 is extremely small. From the above, it is understood that the method of the present invention also has an effect of recovering the activity of the catalyst which has deteriorated due to a large quantity of alkaline carbonate.

### [Example 3]

In order to compare deliquescency under a humid condition, the following test was conducted. A plant and wood ash containing 20 wt% of potassium carbonate was uniformly sprinkled on the surface of the catalyst which was cut out into 100 mm square so that the plant and wood ash became 1 g/m², then this catalyst was sandwiched between two sheets of powder paper, and the ash was crimped onto the catalyst. Then, this catalyst was cut out into 20 mm in width x 100 mm in length, was charged into reaction pipe of a flow system, and was exposed to the gas on conditions shown in Table 3. Here, as for the condition of the gas, the aqueous solution of sulfuric acid was injected into the gas so that the concentration of SO₃ in the gas became 100 ppm. After that, the obtained catalyst was left at rest in a closed container at 30°C having a relative humidity of 100% for 100 hours, and then was dried at 120°C for 2 hours.

Subsequently, the ash which deposited onto the obtained catalyst was removed, and then potassium which moved into the catalyst was measured by fluorescent X-rays.

### [Comparative example 3]

Similar treatment to that in Example 3 was performed except that the aqueous solution of sulfuric acid in Example 3 was changed to water. The results on Example 3 and Comparative example 3 were collectively shown in Table 5.

**[Table 5]**

| | Amount of deposited K₂O after treatment (wt%) |
|---|---|
| Example 3 | 0.1 |
| Comparative example 3 | 1.2 |

From Table 5, the amount of potassium which moved into the catalyst is extremely small in the case of the catalyst in Example 3, which was exposed to the humid condition after the sulfuric acid was added to an upstream of the denitrification catalyst, as compared with the case of the catalyst in Comparative example 2, which was exposed to the humid condition while the sulfuric acid was not added thereto. Thus, if the denitrification method of the present embodiment is employed, the method can greatly enhance the deterioration of the catalytic activity (deterioration of catalyst) due to the moisture absorption of an ash which contains potassium carbonate.

### Reference Signs List

- 1: Flue gas treatment apparatus
- 3: Boiler
- 5: Flue gas duct
- 7: Denitrification device
- 9: Reducing-agent spraying device
- 11: Sulfuric acid spraying device
- 13, 17: Injection nozzle

## Claims

1. A method for flue gas denitrification comprising:
blowing ammonia or urea as a reducing agent into a flue gas that is formed by a mono-fuel combustion of biomass or a multi-fuel combustion of a biomass fuel and coal;
bringing the flue gas into contact with a denitrification catalyst that contains titanium oxide as a main component; and
reducing and removing nitrogen oxide contained in the flue gas, wherein
sulfuric acid or SO₃ gas is injected into the flue gas which flows upstream of the denitrification catalyst.

2. The method for flue gas denitrification according to claim 1, wherein
an amount of the sulfuric acid or SO₃ gas to be sprayed is adjusted so that a concentration of the SO₃ in the flue gas which flows upstream of the denitrification catalyst is 10 ppm or more and 100 ppm or less.
